# EUROPEAN PATENT APPLICATION

(11) **EP 3 429 004 A1**
(43) Date of publication of application: **16.01.2019**
(21) Application number: 17762818.7
(22) Date of filing: 14.02.2017
(51) Int. Cl.: H01M 8/02, H01M 4/86, H01M 4/88, H01M 8/10

(54) **CATALYST COMPOSITION, METHOD FOR PRODUCING POLYMER ELECTROLYTE MEMBRANE ELECTRODE ASSEMBLY, AND POLYMER ELECTROLYTE MEMBRANE ELECTRODE ASSEMBLY**

(30) Priority: 10.03.2016 JP 2016046416; 14.03.2016 JP 2016049285
(71) Applicant: Panasonic Intellectual Property Management Co., Ltd., Osaka-shi, Osaka 540-6207 (JP)
(72) Inventor: YAMAMOTO Masao, Osaka 540-6207 (JP); SUGIMOTO Kazuhiko, Osaka 540-6207 (JP)
(74) Representative: Grünecker Patent- und Rechtsanwälte PartG mbB
(86) International application number: PCT/JP2017/005208
(87) International publication number: WO 2017/154475

(57) **Abstract**

Provided is a method for manufacturing a polymer electrolyte film electrode junction body, the method including: a catalyst composition applying step (step S12) of applying a catalyst composition to both surfaces of a polymer electrolyte film, the catalyst composition containing a catalyst composition and a dispersion medium; and an electrode catalyst layer forming step (step S13) of forming an electrode catalyst layer on both surfaces of the polymer electrolyte film by removing the dispersion medium from the catalyst composition applied to the polymer electrolyte film. The catalyst composition has a surface tension smaller than a critical surface tension of the polymer electrolyte film.

## Description

### TECHNICAL FIELD

The present invention relates to a polymer electrolyte film electrode junction body for a fuel cell which is used in household cogeneration systems, power sources for electric cars, and portable power sources; a method for manufacturing the polymer electrolyte film electrode junction body; and a catalyst composition for forming an electrode catalyst layer on a polymer electrolyte film.

### BACKGROUND ART

A fuel cell including a polymer electrolyte film electrode junction body is known as a fuel cell which generates power through an electrochemical reaction of a fuel gas with an oxidant gas. Heretofore, this type of polymer electrolyte film electrode junction body has been formed by bonding an electrode catalyst layer to both surfaces of a polymer electrolyte film (see, for example, PTL 1).

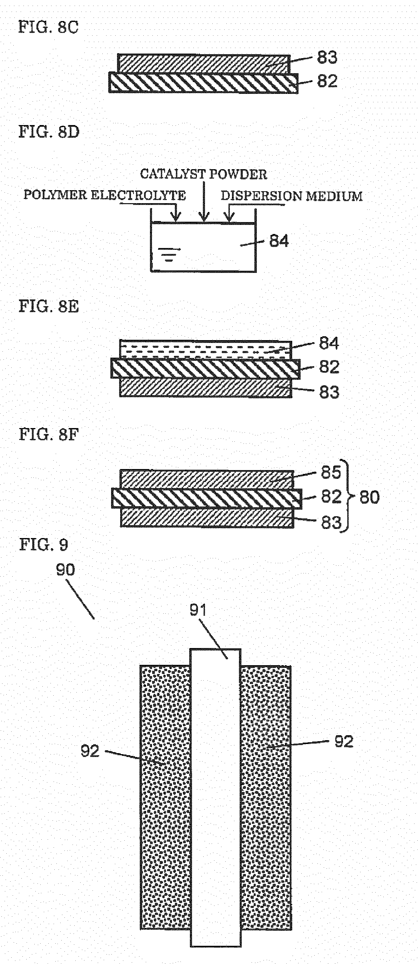

FIG. 9 is a block diagram showing conventional polymer electrolyte film electrode junction body 90 described in PTL 1.

As shown in FIG. 9, polymer electrolyte film electrode junction body 90 includes polymer electrolyte film 91 having hydrogen ion conductivity, and electrode catalyst layer 92 formed on both surfaces of polymer electrolyte film 91.

Here, electrode catalyst layer 92 is mainly composed of a catalyst powder containing a catalyst such as platinum carried on a carbon powder. Electrode catalyst layer 92 performs a function of promoting an electrochemical reaction by oxidizing hydrogen in a fuel gas and reducing oxygen in an oxidant gas. Electrode catalyst layer 92 plays an important role that significantly influences power generation performance of a fuel cell.

For improving performance of such a polymer electrolyte film electrode junction body, various methods for manufacturing a polymer electrolyte film electrode junction body have been heretofore proposed.

Examples of the method for manufacturing a polymer electrolyte film electrode junction body include methods (1), (2), and (3) below. (1) An electrode catalyst layer is formed on a porous conductive base material, and the electrode catalyst layer is disposed on both sides of a polymer electrolyte film, and bonded to the polymer electrolyte film by a hot press to obtain a polymer electrolyte film electrode junction body. (2) An electrode catalyst layer is formed on a base material film, and the electrode catalyst layer is then transferred to a polymer electrolyte film by a hot press or a hot roller to obtain a polymer electrolyte film electrode junction body. (3) A catalyst composition containing a catalyst powder and a dispersion medium is applied directly to both surfaces of a polymer electrolyte film, and an electrode catalyst layer is formed on both surfaces of the polymer electrolyte film by removal of the dispersion medium to obtain a polymer electrolyte film electrode junction body.

The methods (1) and (2) each include a step of bonding an electrode catalyst layer and a polymer electrolyte film by a hot press or a hot roller. These methods have such a problem that in this step, pore portions serving to diffuse a gas in an electrode catalyst layer are crushed, so that gas diffusibility is reduced, leading to deterioration of performance of a polymer electrolyte film electrode junction body, particularly power generation performance of a fuel cell. Thus, the method (3) that does not include a step which crushes pore portions in an electrode catalyst layer is mainly used.

In the method (3), a catalyst composition prepared using a dispersion medium having a surface tension smaller than a critical surface tension of a polymer electrolyte film is used for forming a uniform electrode catalyst layer on both surfaces of the polymer electrolyte film (see, for example, PTL 2).

### Citation List

### Patent Literatures

PTL 1: Unexamined Japanese Patent Publication No. 2010-118284
PTL 2: Unexamined Japanese Patent Publication No. 2002-063911

### SUMMARY OF THE INVENTION

However, in the conventional method (3) for manufacturing a polymer electrolyte film electrode junction body, a catalyst composition that is a mixture of a catalyst powder and a dispersion medium may have a surface tension larger than a critical surface tension of a polymer electrolyte film even when the dispersion medium has a surface tension smaller than the critical surface tension of the polymer electrolyte film. Accordingly, an electrode catalyst layer may be delaminated or cracked because the catalyst composition cannot be uniformly applied to both surfaces of the polymer electrolyte film.

The catalyst composition to be applied to one surface of the polymer electrolyte film and the catalyst composition to be applied to the other surface have mutually different compositions. Thus, both surfaces may have different surface tensions, and in a step of applying the catalyst composition to one surface of the polymer electrolyte film, and then removing the dispersion medium from the catalyst composition, the surface tension of the other surface of the polymer electrolyte film may considerably change depending on a method for removal of the dispersion medium. Thus, there is such a problem that in application of the catalyst composition to the other surface of the polymer electrolyte film, wettability of the catalyst composition is markedly deteriorated, so that the electrode catalyst layer is more noticeably delaminated or cracked. There is still room for improvement particularly in terms of wettability between the polymer electrolyte film and the catalyst composition.

The present invention is intended to solve conventional problems, and provides a method for manufacturing a polymer electrolyte film electrode junction body free from defects such as delamination and cracks in an electrode catalyst layer, and a catalyst composition for forming an electrode catalyst layer free from defects such as delamination and cracks. The present invention provides a polymer electrolyte film electrode junction body having excellent quality and high performance by using the manufacturing method and the catalyst composition.

The method for manufacturing a polymer electrolyte film electrode junction body according to the present invention includes: a catalyst composition applying step of applying a catalyst composition to both surfaces of a polymer electrolyte film, the catalyst composition containing a catalyst powder and a dispersion medium; and an electrode catalyst layer forming step of forming an electrode catalyst layer on both surfaces of the polymer electrolyte film by removing the dispersion medium from the catalyst composition applied to the polymer electrolyte film. The catalyst composition has a surface tension smaller than a critical surface tension of the polymer electrolyte film.

Accordingly, the catalyst composition can be applied to both surfaces of the polymer electrolyte film, and therefore an electrode catalyst layer free from defects such as delamination and cracks can be formed on both surfaces of the polymer electrolyte film. Thus, a polymer electrolyte film electrode junction body having excellent quality and high performance can be manufactured.

The catalyst composition according to the present invention is a catalyst composition for forming an electrode catalyst layer on a polymer electrolyte film by applying the catalyst composition to a polymer electrolyte film, and removing a dispersion medium. The catalyst composition according to the present invention includes a catalyst powder and a dispersion medium, and has a surface tension smaller than a critical surface tension of the polymer electrolyte film.

Accordingly, the catalyst composition can be applied to the polymer electrolyte film, and therefore an electrode catalyst layer free from defects such as delamination and cracks can be formed on the polymer electrolyte film.

With the catalyst composition and the method for manufacturing a polymer electrolyte film electrode junction body according to the present invention, wettability of the catalyst composition with the polymer electrolyte film is considerably improved. Thus, there can be provided a method for manufacturing a polymer electrolyte film electrode junction body free from defects such as delamination and cracks in an electrode catalyst layer, and a catalyst composition for forming an electrode catalyst layer free from defects such as delamination and cracks. Therefore, the present invention can provide a polymer electrolyte film electrode junction body having excellent quality and high performance.

### BRIEF DESCRIPTION OF DRAWINGS

FIG. 1 is a schematic view for explaining a configuration of a catalyst composition in a first exemplary embodiment of the present invention.
FIG. 2 is a block diagram showing a polymer electrolyte film electrode junction body manufactured by a method for manufacturing a polymer electrolyte film electrode junction body in the first exemplary embodiment of the present invention.
FIG. 3 is a flowchart showing the method for manufacturing a polymer electrolyte film electrode junction body in the first exemplary embodiment of the present invention.
FIG. 4A is a schematic view showing a catalyst composition preparing step in the method for manufacturing a polymer electrolyte film electrode junction body in the first exemplary embodiment of the present invention.
FIG. 4B is a schematic view showing a state in which a catalyst composition is applied to both surfaces of a polymer electrolyte film by a catalyst composition applying step in the method for manufacturing a polymer electrolyte film electrode junction body in the first exemplary embodiment of the present invention.
FIG. 4C is a schematic view showing a state in which an electrode catalyst layer is formed on both surfaces of a polymer electrolyte film by an electrode catalyst layer forming step in the method for manufacturing a polymer electrolyte film electrode junction body in the first exemplary embodiment of the present invention.
FIG. 5 is a schematic view for explaining a configuration of a catalyst composition in a second exemplary embodiment of the present invention.
FIG. 6 is a block diagram showing a polymer electrolyte film electrode junction body manufactured by a method for manufacturing a polymer electrolyte film electrode junction body in the second exemplary embodiment of the present invention.
FIG. 7 is a flowchart showing the method for manufacturing a polymer electrolyte film electrode junction body in the second exemplary embodiment of the present invention.
FIG. 8A is a schematic view showing a first catalyst composition preparing step in the method for manufacturing a polymer electrolyte film electrode junction body in the second exemplary embodiment of the present invention.
FIG. 8B is a schematic view showing a state in which a first catalyst composition is applied to one surface of a polymer electrolyte film by a first catalyst composition applying step in the method for manufacturing a polymer electrolyte film electrode junction body in the second exemplary embodiment of the present invention.
FIG. 8C is a schematic view showing a state in which a first electrode catalyst layer is formed on one surface of a polymer electrolyte film by a first electrode catalyst layer forming step in the method for manufacturing a polymer electrolyte film electrode junction body in the second exemplary embodiment of the present invention.
FIG. 8D is a schematic view showing a second catalyst composition preparing step in the method for manufacturing a polymer electrolyte film electrode junction body in the second exemplary embodiment of the present invention.
FIG. 8E is a schematic view showing a state in which a second catalyst composition is applied to the other surface of a polymer electrolyte film by a second catalyst composition applying step in the method for manufacturing a polymer electrolyte film electrode junction body in the second exemplary embodiment of the present invention.
FIG. 8F is a schematic view showing a state in which a second electrode catalyst layer is formed on the other surface of a polymer electrolyte film by a second electrode catalyst layer forming step in the method for manufacturing a polymer electrolyte film electrode junction body in the second exemplary embodiment of the present invention.
FIG. 9 is a block diagram showing a conventional polymer electrolyte film electrode junction body described in PTL 1.

### DESCRIPTION OF EMBODIMENTS

Hereinafter, exemplary embodiments of the present invention will be described with reference to drawings. The present invention is not limited to these exemplary embodiments.

### FIRST EXEMPLARY EMBODIMENT

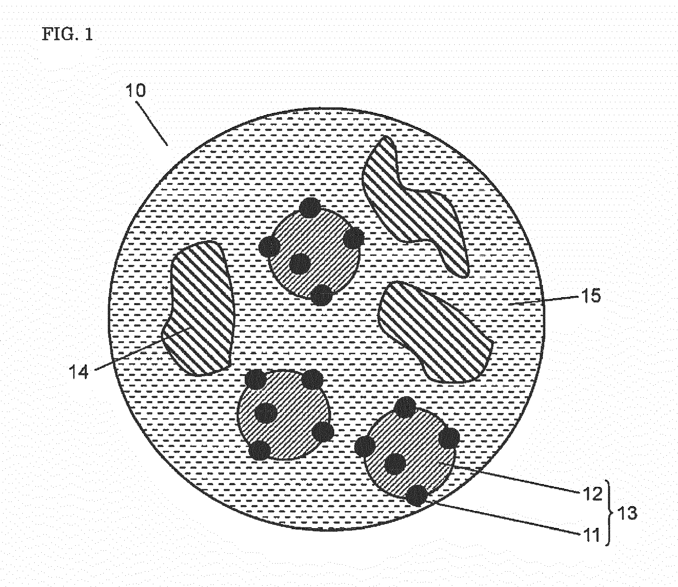

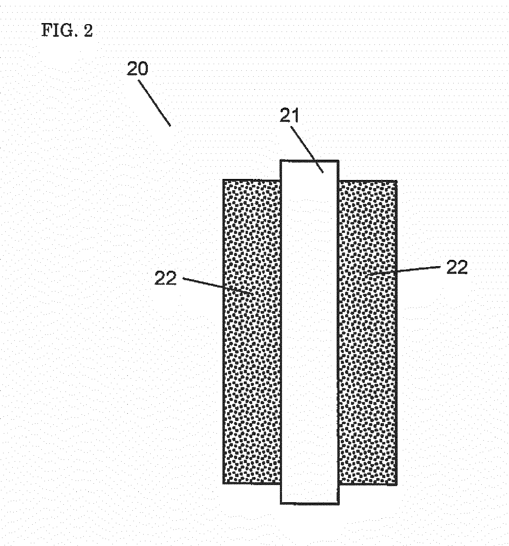

FIG. 1 is a schematic view for explaining a configuration of a catalyst composition in a first exemplary embodiment of the present invention. FIG. 2 is a block diagram showing a polymer electrolyte film electrode junction body manufactured by a method for manufacturing a polymer electrolyte film electrode junction body in the first exemplary embodiment of the present invention.

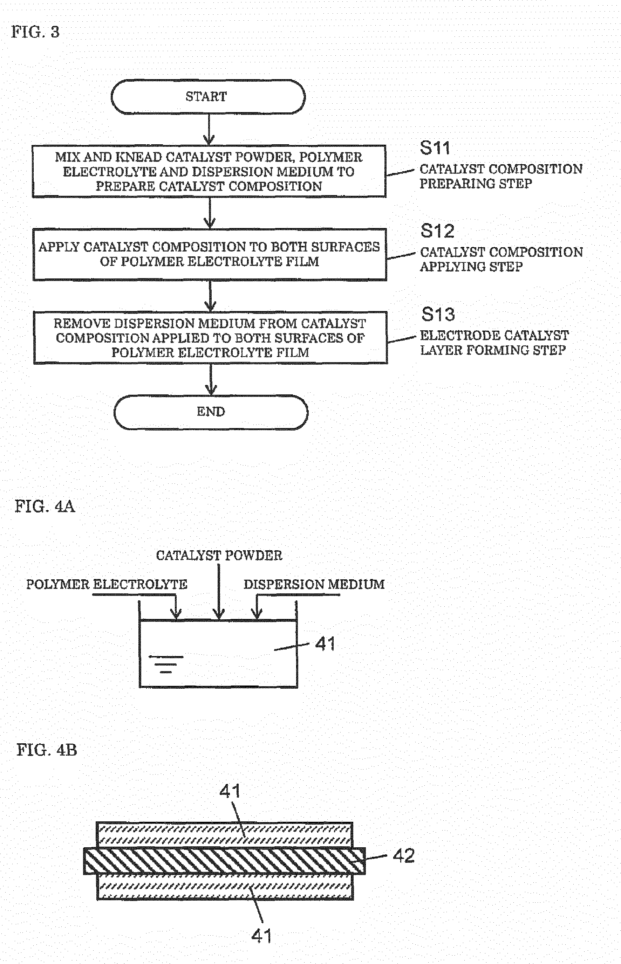

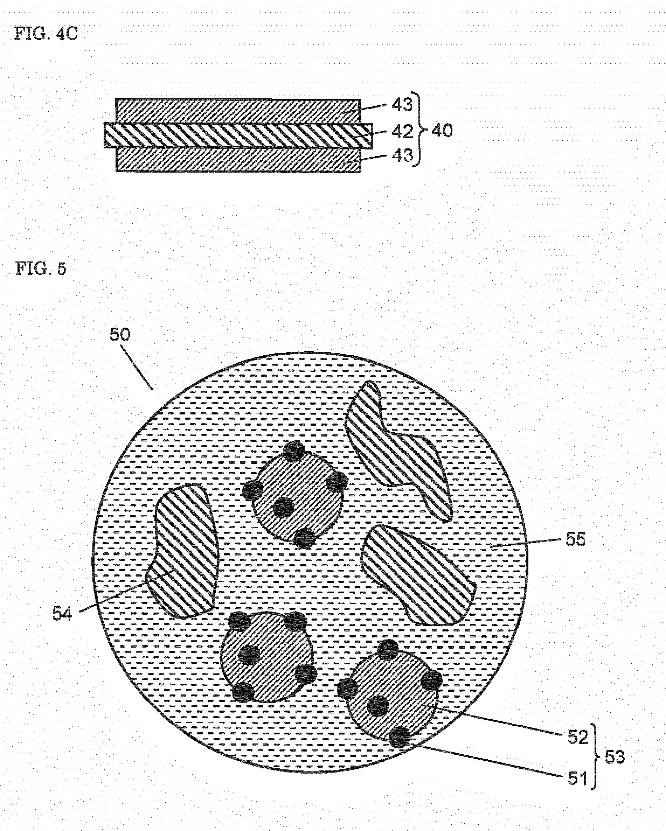

FIG. 3 is a flowchart showing the method for manufacturing a polymer electrolyte film electrode junction body in the first exemplary embodiment of the present invention. FIG. 4A is a schematic view showing a catalyst composition preparing step in the method for manufacturing a polymer electrolyte film electrode junction body in the first exemplary embodiment of the present invention. FIG. 4B is a schematic view showing a state in which a catalyst composition is applied to both surfaces of a polymer electrolyte film by a catalyst composition applying step in the method for manufacturing a polymer electrolyte film electrode junction body in the first exemplary embodiment of the present invention. FIG. 4C is a schematic view showing a state in which an electrode catalyst layer is formed on both surfaces of a polymer electrolyte film by an electrode catalyst layer forming step in the method for manufacturing a polymer electrolyte film electrode junction body in the first exemplary embodiment of the present invention.

Catalyst composition 10 in the first exemplary embodiment of the present invention will be described with reference to FIG. 1.

As shown in FIG. 1, catalyst composition 10 includes catalyst powder 13, polymer electrolyte 14 and dispersion medium 15.

Catalyst powder 13 includes carbon powder 12 carrying catalyst particles 11 composed of platinum or a platinum alloy.

The polymer electrolyte film electrode junction body in the first exemplary embodiment of the present invention will be described with reference to FIG. 2.

As shown in FIG. 2, polymer electrolyte film electrode junction body 20 includes polymer electrolyte film 21, and electrode catalyst layer 22 formed on both surfaces of polymer electrolyte film 21.

Polymer electrolyte film 21 includes a resin having hydrogen ion conductivity. Specifically, polymer electrolyte film 21 includes a resin having a sulfonic acid group with a fluorine-containing polymer as a skeleton.

Electrode catalyst layer 22 contains a catalyst powder including carbon particles carrying platinum or a platinum alloy, and a polymer electrolyte.

The method for manufacturing a polymer electrolyte film electrode junction body in the first exemplary embodiment of the present invention will be described with reference to FIG. 3.

As shown in FIG. 3, the method for manufacturing a polymer electrolyte film electrode junction body in the first exemplary embodiment includes: a catalyst composition preparing step (step S11) of mixing and kneading a catalyst powder, a polymer electrolyte and a dispersion medium to prepare a catalyst composition in which the catalyst powder and the polymer electrolyte are dispersed in the dispersion medium; a catalyst composition applying step (step S12) of applying the catalyst composition to both surfaces of a polymer electrolyte film; and an electrode catalyst layer forming step (step S13) of forming an electrode catalyst layer on both surfaces of the polymer electrolyte film by removing the dispersion medium from the catalyst composition applied to the polymer electrolyte film.

Hereinafter, the steps in the foregoing method for manufacturing a polymer electrolyte film electrode junction body will be described in order in detail with reference to FIGS. 3, 4A, 4B and 4C.

In the catalyst composition preparing step (step S11), a catalyst powder and a polymer electrolyte are mixed and kneaded in a presence of a dispersion medium to prepare a catalyst composition in which the catalyst powder and the polymer electrolyte are uniformly dispersed in the dispersion medium. Specifically, the catalyst powder, the polymer electrolyte and the dispersion medium are taken in a container, and these materials are mixed and kneaded at room temperature for several hours using a disperser (manufactured by Seiwa Giken, product name: RS-05W), an ultrasonic homogenizer (manufactured by NIHONSEIKI KAISHA LTD., product name: US-150E) and so on. Accordingly, the catalyst powder and the polymer electrolyte are dispersed in the dispersion medium to obtain catalyst composition 41 (see FIG. 4A).

In the catalyst composition applying step (step S12), the catalyst composition prepared in the catalyst composition preparing step (step S11) is applied to both surfaces of a polymer electrolyte film. Specifically, polymer electrolyte film 42 is fixed, and catalyst composition 41 is applied to both surfaces of polymer electrolyte film 42 by a screen printing method (see FIG. 4B).

In the electrode catalyst layer forming step (step S13), an electrode catalyst layer is formed by removing the dispersion medium from the catalyst composition formed on both surfaces of the polymer electrolyte film in the catalyst composition applying step (step S12). Specifically, polymer electrolyte film 42 and catalyst composition 41 are left standing under a room temperature environment to remove the dispersion medium from catalyst composition 41. Accordingly, electrode catalyst layer 43 is formed on both surfaces of polymer electrolyte film 42. In this way, polymer electrolyte film electrode junction body 40 is manufactured (see FIG. 4C).

As described above, the method for manufacturing a polymer electrolyte film electrode junction body in this exemplary embodiment includes: a catalyst composition applying step (step S12) of applying a catalyst composition to both surfaces of a polymer electrolyte film, the catalyst composition containing a catalyst powder and a dispersion medium; and an electrode catalyst layer forming step (step S13) of forming an electrode catalyst layer on both surfaces of the polymer electrolyte film by removing the dispersion medium from the catalyst composition applied to the polymer electrolyte film.

Accordingly, the catalyst composition can be applied to both surfaces of the polymer electrolyte film, and therefore an electrode catalyst layer free from defects such as delamination and cracks can be formed on both surfaces of the polymer electrolyte film. Thus, a polymer electrolyte film electrode junction body having excellent quality and high performance can be manufactured.

Here, the dispersion medium may be evaporated by heating to be removed from the catalyst composition.

Accordingly, efficiency of removal of the dispersion medium from the catalyst composition can be improved. Therefore, deterioration of performance of the polymer electrolyte film electrode junction body due to remaining of the dispersion medium in the electrode catalyst layer can be prevented.

The catalyst composition in this exemplary embodiment is a catalyst composition for forming an electrode catalyst layer on a polymer electrolyte film by applying the catalyst composition to a polymer electrolyte film, and removing a dispersion medium. The catalyst composition contains a catalyst powder and a dispersion medium. The catalyst composition has a surface tension smaller than a critical surface tension of the polymer electrolyte film.

Accordingly, the catalyst composition can be applied to the polymer electrolyte film, and therefore a uniform coating film including the catalyst composition can be formed on both surfaces of the polymer electrolyte film. By removing the dispersion medium from the film, an electrode catalyst layer free from defects such as delamination and cracks can be formed on both surfaces of the polymer electrolyte film.

The polymer electrolyte film electrode junction body in this exemplary embodiment is manufactured by the above-mentioned method.

Accordingly, the electrode catalyst layer formed on both surfaces of the polymer electrolyte film is free from defects such as delamination and cracks. Therefore, a polymer electrolyte film electrode junction body having excellent quality and high performance can be achieved.

Hereinafter, a specific example will be described further in detail for the method for manufacturing a polymer electrolyte film electrode junction body and the polymer electrolyte film electrode junction body in this exemplary embodiment. The present invention is not limited to descriptions of specific raw materials that are used in the following example.

### EXAMPLE 1

In Example 1, a polymer electrolyte film electrode junction body was manufactured by applying a catalyst composition to a surface of a polymer electrolyte film, and removing a dispersion medium from the catalyst composition using a natural drying method in which the dispersion medium was not heated, but left standing to be dried.

A catalyst composition preparing step will be described.

In the catalyst composition preparing step, 15 parts by weight of a carbon powder carrying platinum (manufactured by Tanaka Kikinzoku Kogyo K.K., product number: TEC10E50E) was used as a catalyst powder, and 50 parts by weight of a 10% Nafion dispersion solution (manufactured by Sigma-Aldrich Co. LLC., product number: 527114) was used as a polymer electrolyte. As the dispersion medium, 20 parts by weight of pure water and 65 parts by weight of ethanol were taken in a container. These materials were mixed and kneaded at room temperature for 2 hours using a disperser (manufactured by Seiwa Giken, product name: RS-05W) and an ultrasonic homogenizer (manufactured by NIHONSEIKI KAISHA LTD., product name: US-150E). In this way, a catalyst composition (hereinafter, referred to as catalyst composition a-1) was prepared.

A surface tension of prepared catalyst composition a-1 was measured using a surface tensiometer (manufactured by Kyowa Interface Science Co., LTD., model number: DY-300). The surface tension of catalyst composition a-1 at 20°C was 28.2 mN/m.

As a catalyst powder, 15 parts by weight of a carbon powder carrying platinum and ruthenium (manufactured by Tanaka Kikinzoku Kogyo K.K., product number: TEC66E50) was used and 50 parts by weight of a 10% Nafion dispersion solution (manufactured by Sigma-Aldrich Co. LLC., product number: 527114) was used as a polymer electrolyte. As the dispersion medium, 20 parts by weight of pure water and 65 parts by weight of ethanol were taken in a container. These materials were mixed and kneaded at room temperature for 2 hours using a disperser (manufactured by Seiwa Giken, product name: RS-05W) and an ultrasonic homogenizer (manufactured by NIHONSEIKI KAISHA LTD., product name: US-150E). In this way, a catalyst composition (hereinafter, referred to as catalyst composition a-2) was prepared.

A surface tension of prepared catalyst composition a-2 was measured using a surface tensiometer (manufactured by Kyowa Interface Science Co., LTD., model number: DY-300). The surface tension of catalyst composition a-2 at 20°C was 28.2 mN/m.

A catalyst composition applying step will be described.

In the catalyst composition applying step, Nafion 112 (manufactured by E. I. du Pont de Nemours and Company) being a perfluorocarbon sulfonic acid film was provided as a polymer electrolyte film, and a critical surface tension of Nafion 112 was determined by Zisman plot method.

Specifically, wet index standard solutions having various surface tensions (manufactured by Wako Pure Chemical Industries, Ltd., product name: Wetting Tension Test Mixture) were deposited on a surface of Nafion 112, and a contact angle θ of each of the solutions was measured.

Next, cos θ was plotted in horizontal axis, and the surface tensions of various wet index standard solutions were plotted in vertical axis. A surface tension corresponding to cos θ = 1 was determined. The determined surface tension was defined as a critical surface tension of Nafion 112.

As a result, the critical surface tension of Nafion 112 at 20°C was 31.2 mN/m. For measurement of the contact angle θ, a contact angle meter (manufactured by Kyowa Interface Science Co., LTD., model number: DM-901) was used.

Nafion 112 different from Nafion 112 of which critical surface tension had been measured was additionally provided. Catalyst composition a-1 and catalyst composition a-2 were applied, respectively, to one surface and the other surface of additional Nafion 112 by a screen printing method using a screen printer (manufactured by NEWLONG SEIMITSU KOGYO Co., LTD., product name: DP-320).

An electrode catalyst layer forming step will be described.

In the electrode catalyst layer forming step, Nafion 112 coated with catalyst composition a-1 and catalyst composition a-2 was left standing in a draft at room temperature for 24 hours. Accordingly, the dispersion medium contained in each of catalyst composition a-1 and catalyst composition a-2 was removed by a natural drying method. An electrode catalyst layer was formed on both surfaces of Nafion 112 (hereinafter, the electrode catalyst layer formed from catalyst composition a-1 by a natural drying method is referred to as electrode catalyst layer A-1, and the electrode catalyst layer formed from catalyst composition a-2 by a natural drying method is referred to as electrode catalyst layer A-2). In this way, a polymer electrolyte film electrode junction body (hereinafter, referred to as polymer electrolyte film electrode junction body A) was manufactured.

A surface of polymer electrolyte film electrode junction body A manufactured in this way was visually observed.
Electrode catalyst layer A-1 and electrode catalyst layer A-2 were not delaminated nor cracked.

### EXAMPLE 2

In Example 2, 15 parts by weight of a carbon powder carrying platinum (manufactured by Tanaka Kikinzoku Kogyo K.K., product number: TEC10E50E) was provided as a catalyst powder. As a polymer electrolyte, 50 parts by weight of a 10% Nafion dispersion solution (manufactured by Sigma-Aldrich Co. LLC., product number: 527114) was provided. As a dispersion medium, 20 parts by weight of pure water and 45 parts by weight of ethanol were provided. Using the above-mentioned materials, a catalyst composition (hereinafter, referred to as catalyst composition b-1) was prepared by a method identical to the method in the catalyst composition preparing step in Example 1.

As a catalyst powder, 15 parts by weight of a carbon powder carrying platinum and ruthenium (manufactured by Tanaka Kikinzoku Kogyo K.K., product number: TEC66E50) was provided. As a polymer electrolyte, 50 parts by weight of a 10% Nafion dispersion solution (manufactured by Sigma-Aldrich Co. LLC., product number: 527114) was provided. As a dispersion medium, 20 parts by weight of pure water and 45 parts by weight of ethanol were provided. A catalyst composition (hereinafter, referred to as catalyst composition b-2) was prepared by a method identical to the method in the catalyst composition preparing step in Example 1.

A surface tension of each of prepared catalyst composition b-1 and catalyst composition b-2 was measured using a surface tensiometer (manufactured by Kyowa Interface Science Co., LTD., model number: DY-300). The surface tension of each of catalyst composition b-1 and catalyst composition b-2 at 20°C was 30.2 mN/m.

Catalyst composition b-1 and catalyst composition b-2 were applied, respectively, to one surface and the other surface of Nafion 112 by a method identical to the method in the catalyst composition applying step in Example 1. Subsequently, using a method identical to the method in the electrode catalyst layer forming step in Example 1, the dispersion medium was removed from catalyst composition b-1 and catalyst composition b-2 by a natural drying method to form an electrode catalyst layer on both surfaces of Nafion 112 (hereinafter, the electrode catalyst layer formed from catalyst composition b-1 by a natural drying method is referred to as electrode catalyst layer B-1, and the electrode catalyst layer formed from catalyst composition b-2 by a natural drying method is referred to as electrode catalyst layer B-2). Accordingly, a polymer electrolyte film electrode junction body (hereinafter, referred to as polymer electrolyte film electrode junction body B) was manufactured.

A surface of manufactured polymer electrolyte film electrode junction body B was visually observed. Electrode catalyst layer B-1 and electrode catalyst layer B-2 were not delaminated nor cracked.

### COMPARATIVE EXAMPLE 1

In Comparative Example 1, 15 parts by weight of a carbon powder carrying platinum (manufactured by Tanaka Kikinzoku Kogyo K.K., product number: TEC10E50E) was provided as a catalyst powder. As a polymer electrolyte, 50 parts by weight of a 10% Nafion dispersion solution (manufactured by Sigma-Aldrich Co. LLC., product number: 527114) was provided. As a dispersion medium, 35 parts by weight of pure water and 30 parts by weight of ethanol were provided. Using the above-mentioned materials, a catalyst composition (hereinafter, referred to as catalyst composition c-1) was prepared by a method identical to the method in the catalyst composition preparing step in Example 1.

As a catalyst powder, 15 parts by weight of a carbon powder carrying platinum and ruthenium (manufactured by Tanaka Kikinzoku Kogyo K.K., product number: TEC66E50) was provided. As a polymer electrolyte, 50 parts by weight of a 10% Nafion dispersion solution (manufactured by Sigma-Aldrich Co. LLC., product number: 527114) was provided. As a dispersion medium, 35 parts by weight of pure water and 30 parts by weight of ethanol were provided. Using the above-mentioned materials, a catalyst composition (hereinafter, referred to as catalyst composition c-2) was prepared by a method identical to the method in the catalyst composition preparing step in Example 1.

A surface tension of each of prepared catalyst composition c-1 and catalyst composition c-2 was measured using a surface tensiometer (manufactured by Kyowa Interface Science Co., LTD., model number: DY-300). The surface tension of each of catalyst composition c-1 and catalyst composition c-2 at 20°C was 32.8 mN/m.

Catalyst composition c-1 and catalyst composition c-2 were applied, respectively, to one surface and the other surface of Nafion 112 by a method identical to the method in the catalyst composition applying step in Example 1. Subsequently, using a method identical to the method in the electrode catalyst layer forming step in Example 1, the dispersion medium was removed from catalyst composition c-1 and catalyst composition c-2 by a natural drying method to form an electrode catalyst layer on both surfaces of Nafion 112 (hereinafter, the electrode catalyst layer formed from catalyst composition c-1 by a natural drying method is referred to as electrode catalyst layer C-1, and the electrode catalyst layer formed from catalyst composition c-2 by a natural drying method is referred to as electrode catalyst layer C-2). In this way, a polymer electrolyte film electrode junction body (hereinafter, referred to as polymer electrolyte film electrode junction body C) was manufactured.

A surface of manufactured polymer electrolyte film electrode junction body C was visually observed. Electrode catalyst layer C-1 and electrode catalyst layer C-2 were partially delaminated. Electrode catalyst layer C-1. and electrode catalyst layer C-2 had a large number of cracks in portions where the electrode catalyst layer existed.

The above results are collectively shown in Table 1.

**[Table 1]**

| | Polymer electrolyte film electrode junction body | Polymer electrolyte film | | Catalyst composition | | | | Electrode catalyst layer | | | |
|---|---|---|---|---|---|---|---|---|---|---|---|
| | Constituent material | Constituent material | Critical surface tension (mN/m@20°C) | Constituent material | Surface tension (mN/m@20°C) | Constituent material | Surface tension (mN/m@20°C) | Constituent material | Whether or not delaminated or cracked | Constituent material | Whether or not delaminated or cracked |
| Example 1 | A | Nafion 112 | 31.2 | a-1 | 28.2 | α-2 | 28.2 | A-1 | Not delaminated Not cracked | A-2 | Not delaminated Not cracked |
| Example 2 | B | Nafion 112 | 31.2 | b-1 | 30.2 | b-2 | 30.2 | B-1 | Not delaminated Not cracked | B-2 | Not delaminated Not cracked |
| Comparative Example 1 | C | Nafion 112 | 31.2 | c-1 | 32.8 | c-2 | 32.8 | C-1 | Delaminated Cracked | C-2 | Delaminated Cracked |

Polymer electrolyte film electrode junction bodies A, B in Example 1, 2 were not delaminated nor cracked in the electrode catalyst layer, and thus had excellent quality. This may be because the catalyst composition had a surface tension smaller than a critical surface tension of the polymer electrolyte film. Therefore, the catalyst composition was wetted with the polymer electrolyte film, so that it was able to form a uniform electrode catalyst layer.

Polymer electrolyte film electrode junction body C in the comparative example was delaminated or cracked in both electrode catalyst layers. The polymer electrolyte film electrode junction body in the comparative example was inferior in quality to polymer electrolyte film electrode junction body A, B in this example.

This may be because the catalyst composition had a surface tension larger than a critical surface tension of the polymer electrolyte film. Therefore, the catalyst composition was not wetted with the polymer electrolyte film, and thus it was not able to form a uniform electrode catalyst layer.

For examining performance of the polymer electrolyte film electrode junction bodies described above, and examining influences of the performance of the polymer electrolyte film electrode junction body on power generation performance of a fuel cell, single cells (1) to (3) were prepared using polymer electrolyte film electrode junction bodies A, B, C, and a power generation test was conducted.

Here, single cells (1) to (3) were prepared in the following manner. A gas diffusion layer was disposed on both surfaces of polymer electrolyte film electrode junction body A, B, C, and a gasket composed of a silicone resin (manufactured by KUREHA ELASTOMER Co., Ltd., product number: SB50NJP) was bonded to polymer electrolyte film electrode junction body A, B, C and an outer periphery of the gas diffusion layer. A separator formed from a resin-impregnated graphite plate with a gas channel formed on a surface was disposed on both surfaces of the polymer electrolyte film electrode junction body.

The gas diffusion layer was prepared in the following manner: a mixture of a dispersion of acetylene black and polytetrafluoroethylene (manufactured by DAIKIN INDUSTRIES, Ltd., product name: D-1) and pure water was applied to a carbon paper (manufactured by Toray Industries, Inc., product name: TGP-H-120), and heated at 350°C for 2 hours.

Power generation performance of single cells (1) to (3) was evaluated in the following manner: air was fed through an air electrode, a hydrogen gas containing 25% of carbon dioxide and 50 ppm of carbon monoxide was fed through a fuel electrode, a cell temperature was set to 80°C, an air utilization rate was set to 40%, a fuel utilization rate was set to 80%, a dew point of air was set to 60°C, a dew point of the hydrogen gas was set to 75°C, and a cell voltage in generation of power at a current density of 0.2 A/cm² was measured. Cell voltages of single cells (1) to (3) are shown in Table 2.

**[Table 2]**

| Single cell | Polymer electrolyte film electrode junction body | Air electrode | | Fuel electrode | | Cell voltage @0.2A/cm² |
|---|---|---|---|---|---|---|
| | | Electrode catalyst layer | Whether or not delaminated or cracked | Electrode catalyst layer | Whether or not delaminated or cracked | |
| (1) | A | A-1 | Not delaminated Not cracked | A-2 | Not delaminated Not cracked | 710 mV |
| (2) | B | B-1 | Not delaminated Not cracked | B-2 | Not delaminated Not cracked | 710 mV |
| (3) | C | C-1 | Delaminated Cracked | C-2 | Delaminated Cracked | 630 mV |

Single cells (1), (2) obtained using polymer electrolyte film electrode junction bodies A, B in the example, which were not cracked nor delaminated in the electrode catalyst layer, had a higher cell voltage as compared to single cell (3) obtained using polymer electrolyte film electrode junction body C in the comparative example, which was cracked or delaminated in the electrode catalyst layer.

This may be because in single cell (1), (2), the catalyst composition was wetted with the polymer electrolyte film, and thus an electrode catalyst layer which was not delaminated nor cracked was formed, so that performance of the polymer electrolyte film electrode junction body was improved, and thus power generation performance of the fuel cell was improved as compared to single cell (3). From the above power generation test, it has been confirmed that polymer electrolyte film electrode junction body A, B manufactured in this exemplary embodiment has improved performance, so that power generation performance of the fuel cell can be improved.

### SECOND EXEMPLARY EMBODIMENT

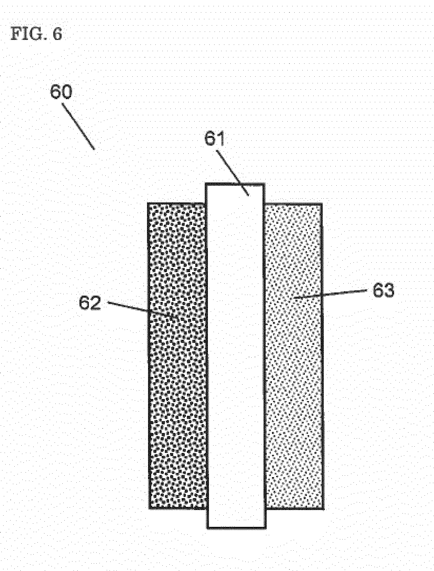

FIG. 5 is a schematic view for explaining a configuration of a catalyst composition in a second exemplary embodiment of the present invention. FIG. 6 is a block diagram showing a polymer electrolyte film electrode junction body manufactured by a method for manufacturing a polymer electrolyte film electrode junction body in the second exemplary embodiment of the present invention.

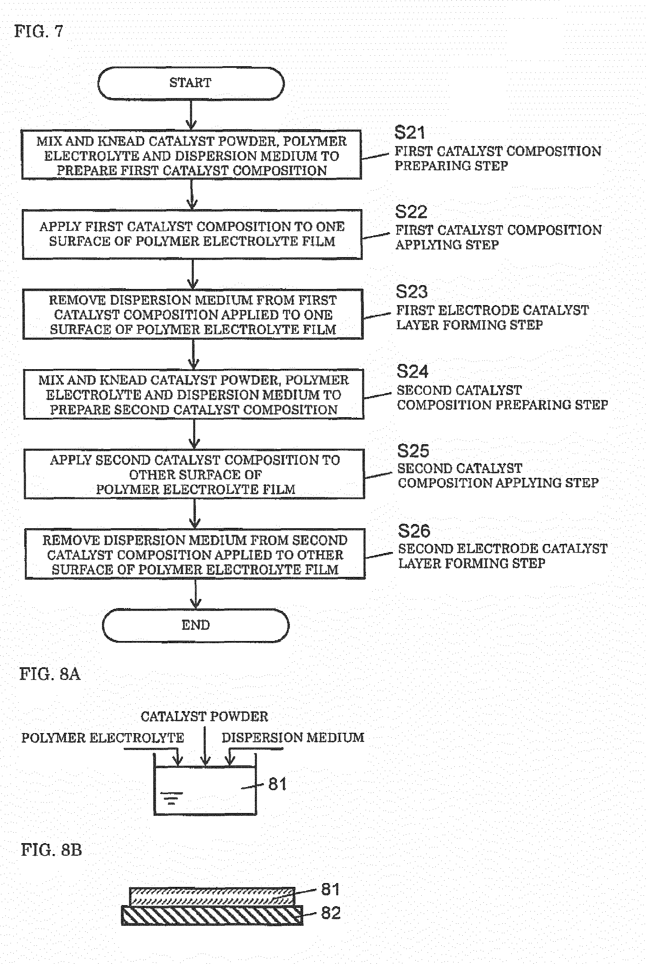

FIG. 7 is a flowchart showing the polymer electrolyte film electrode junction body in the second exemplary embodiment of the present invention. FIG. 8A is a schematic view showing a first catalyst composition preparing step in the method for manufacturing a polymer electrolyte film electrode junction body in the second exemplary embodiment of the present invention. FIG. 8B is a schematic view showing a state in which a first catalyst composition is applied to one surface of a polymer electrolyte film by a first catalyst composition applying step in the method for manufacturing a polymer electrolyte film electrode junction body in the second exemplary embodiment of the present invention. FIG. 8C is a schematic view showing a state in which a first electrode catalyst layer is formed on one surface of a polymer electrolyte film by a first electrode catalyst layer forming step in the method for manufacturing a polymer electrolyte film electrode junction body in the second exemplary embodiment of the present invention. FIG. 8D is a schematic view showing a second catalyst composition preparing step in the method for manufacturing a polymer electrolyte film electrode junction body in the second exemplary embodiment of the present invention. FIG. 8E is a schematic view showing a state in which a second catalyst composition is applied to the other surface of a polymer electrolyte film by a second catalyst composition applying step in the method for manufacturing a polymer electrolyte film electrode junction body in the second exemplary embodiment of the present invention. FIG. 8F is a schematic view showing a state in which a second electrode catalyst layer is formed on the other surface of a polymer electrolyte film by a second electrode catalyst layer forming step in the method for manufacturing a polymer electrolyte film electrode junction body in the second exemplary embodiment of the present invention.

Catalyst composition 50 in the second exemplary embodiment of the present invention will be described with reference to FIG. 5.

As shown in FIG. 5, catalyst composition 50 includes catalyst powder 53, polymer electrolyte 54 and dispersion medium 55.

Catalyst powder 53 includes carbon powder 52 carrying catalyst particles 51 composed of platinum or a platinum alloy.

The polymer electrolyte film electrode junction body in the second exemplary embodiment of the present invention will be described with reference to FIG. 6.

As shown in FIG. 6, polymer electrolyte film electrode junction body 60 includes polymer electrolyte film 61, first electrode catalyst layer 62 formed on one surface of polymer electrolyte film 61, and second electrode catalyst layer 63 formed on the other surface of polymer electrolyte film 61.

Polymer electrolyte film 61 includes a resin having hydrogen ion conductivity. Specifically, polymer electrolyte film 61 includes a resin having a sulfonic acid group with a fluorine-containing polymer as a skeleton.

First electrode catalyst layer 62 and second electrode catalyst layer 63 contain a catalyst powder including carbon particles carrying platinum or a platinum alloy, and a polymer electrolyte.

The method for manufacturing a polymer electrolyte film electrode junction body in the second exemplary embodiment of the present invention will be described with reference to FIG. 7.

As shown in FIG. 7, the method for manufacturing a polymer electrolyte film electrode junction body in the second exemplary embodiment includes: a first catalyst composition preparing step (step S21) of mixing and kneading a catalyst powder, a polymer electrolyte and a dispersion medium to prepare a catalyst composition in which the catalyst powder and the polymer electrolyte are dispersed in the dispersion medium; a first catalyst composition applying step (step S22) of applying the first catalyst composition to one surface of a polymer electrolyte film; a first electrode catalyst layer forming step (step S23) of forming a first electrode catalyst layer on one surface of the polymer electrolyte film by removing the dispersion medium from the first catalyst composition applied to the polymer electrolyte film; a second catalyst composition preparing step (step S24) of mixing and kneading a catalyst powder, a polymer electrolyte and a dispersion medium to prepare a second catalyst composition in which the catalyst powder and the polymer electrolyte are dispersed in the dispersion medium; a second catalyst composition applying step (step S25) of applying the second catalyst composition to a surface of the polymer electrolyte film, which is different from the surface provided with the first electrode catalyst layer; and a second electrode catalyst layer forming step (step S26) of forming a second electrode catalyst layer on the other surface of the polymer electrolyte film by removing the dispersion medium from the second catalyst composition applied to the polymer electrolyte film.

Hereinafter, the steps in the foregoing method for manufacturing a polymer electrolyte film electrode junction body will be described in order in detail with reference to FIGS. 7, 8A, 8B, 8C, 8D, 8E and 8F.

In the first catalyst composition preparing step (step S21), a catalyst powder and a polymer electrolyte are mixed and kneaded in a presence of a dispersion medium to prepare a catalyst composition in which the catalyst powder and the polymer electrolyte are dispersed in the dispersion medium. Specifically, the catalyst powder, the polymer electrolyte and the dispersion medium are taken in a container, and these materials are mixed and kneaded at room temperature for several hours using a disperser (manufactured by Seiwa Giken, product name: RS-05W), an ultrasonic homogenizer (manufactured by NIHONSEIKI KAISHA LTD., product name: US-150E) and so on. Accordingly, the catalyst powder and the polymer electrolyte are dispersed in the dispersion medium to obtain first catalyst composition 81 (see FIG. 8A).

In the first catalyst composition applying step (step S22), the first catalyst composition prepared in the first catalyst composition preparing step (step S21) is applied to one surface of a polymer electrolyte film. Specifically, polymer electrolyte film 82 is fixed, and first catalyst composition 81 is applied to one surface of polymer electrolyte film 82 by a screen printing method (see FIG. 8B).

In the first electrode catalyst layer forming step (step S23), a first electrode catalyst layer is formed by removing the dispersion medium from the first catalyst composition formed on one surface of the polymer electrolyte film in the first catalyst composition applying step (step S22). Specifically, polymer electrolyte film 82 and first catalyst composition 81 are left standing under a high temperature environment to remove the dispersion medium from first catalyst composition 81. Accordingly, first electrode catalyst layer 83 is formed on one surface of polymer electrolyte film 82 (see FIG. 8C).

In the second catalyst composition preparing step (step S24), a catalyst powder and a polymer electrolyte are mixed and kneaded in a presence of a dispersion medium to prepare a second catalyst composition in which the catalyst powder and the polymer electrolyte are dispersed in the dispersion medium. Specifically, the catalyst powder, the polymer electrolyte and the dispersion medium are taken in a container, and these materials are mixed and kneaded at room temperature for several hours using a disperser (manufactured by Seiwa Giken, product name: RS-05W), an ultrasonic homogenizer (manufactured by NIHONSEIKI KAISHA LTD., product name: US-150E) and so on. Accordingly, the catalyst powder and the polymer electrolyte are dispersed in the dispersion medium to obtain second catalyst composition 84 (see FIG. 8D).

In the second catalyst composition applying step (step S25), the second catalyst composition prepared in the second catalyst composition preparing step (step S24) is applied to the other surface of a polymer electrolyte film. Specifically, polymer electrolyte film 82 is fixed in such a manner that the other surface of polymer electrolyte film 82 provided with first electrode catalyst layer 83 is an upper surface, and by a screen printing method, second catalyst composition 84 is applied to a surface on a side opposite to the surface provided with first electrode catalyst layer 83 (see FIG. 8E).

In the second electrode catalyst layer forming step (step S26), a second electrode catalyst layer is formed by removing the dispersion medium from the second catalyst composition formed in the second catalyst composition applying step (step S25). Specifically, polymer electrolyte film 82 provided with first electrode catalyst layer 83, and second catalyst composition 84 are left standing under a high temperature environment to remove the dispersion medium from second catalyst composition 84. Accordingly, second electrode catalyst layer 85 is formed on the other surface of polymer electrolyte film 82. In this way, polymer electrolyte film electrode junction body 80 is manufactured (see FIG. 8F).

As described above, the method for manufacturing a polymer electrolyte film electrode junction body in this exemplary embodiment includes: a first catalyst composition applying step (step S22) of applying a first catalyst composition to one surface of a polymer electrolyte film, the first catalyst composition containing a catalyst powder and a dispersion medium; a first electrode catalyst layer forming step (step S23) of forming a first electrode catalyst layer on one surface of the polymer electrolyte film by removing the dispersion medium from the first catalyst composition applied to the polymer electrolyte film; a second catalyst composition applying step (step S25) of applying a second catalyst composition to the other surface of the polymer electrolyte film, the second catalyst composition containing a catalyst powder and a dispersion medium; and a second electrode catalyst layer forming step (step S26) of forming a second electrode catalyst layer on the other surface of the polymer electrolyte film by removing the dispersion medium from the second catalyst composition applied to the polymer electrolyte film. The first catalyst composition and the second catalyst composition each have a surface tension smaller than a critical surface tension of the polymer electrolyte film.

Accordingly, even when the first catalyst composition and the second catalyst composition have mutually different surface tensions, both the first catalyst composition and the second catalyst composition can be applied to the polymer electrolyte film. Thus, an electrode catalyst layer free from defects such as delamination and cracks can be formed on both surfaces of the polymer electrolyte film. Therefore, a polymer electrolyte film electrode junction body having excellent quality and high performance can be manufactured.

Preferably, the second catalyst composition applying step is carried out after the first electrode catalyst layer forming step. The surface tension of the second catalyst composition is preferably smaller than a critical surface tension of a surface of the polymer electrolyte film on a side opposite to the surface provided with the first electrode catalyst layer formed through the first electrode catalyst layer forming step.

Accordingly, the second catalyst composition can be applied to the polymer electrolyte film even if the critical surface tension of a surface of the polymer electrolyte film on a side opposite to the surface provided with the first electrode catalyst layer is changed in removal of the dispersion medium from the first catalyst composition in the first electrode catalyst layer forming step. Thus, an electrode catalyst layer free from defects such as delamination and cracks can be formed on both surfaces of the polymer electrolyte film. Therefore, a polymer electrolyte film electrode junction body having excellent quality and high performance can be manufactured.

The catalyst composition in this exemplary embodiment is a catalyst composition for forming an electrode catalyst layer on a surface of a polymer electrolyte film by applying the catalyst composition to the surface of the polymer electrolyte film, and removing a dispersion medium, the polymer electrolyte film having an electrode catalyst layer formed on the other surface. The catalyst composition contains a catalyst powder and a dispersion medium. The catalyst composition has a surface tension smaller than a critical surface tension of a surface of the polymer electrolyte film having an electrode catalyst layer formed on the other surface.

Accordingly, the catalyst composition can be applied to the polymer electrolyte film even if the critical surface tension of a surface of the polymer electrolyte film is changed in formation of an electrode catalyst layer on the other surface of the polymer electrolyte film. Thus, a uniform coating film including the catalyst composition can be formed on both surfaces of the polymer electrolyte film. Therefore, by removing the dispersion medium from the coating film, an electrode catalyst layer free from defects such as delamination and cracks can be formed on both surfaces of the polymer electrolyte film.

The polymer electrolyte film electrode junction body in this exemplary embodiment may be manufactured using the catalyst composition in this exemplary embodiment.

Accordingly, the catalyst composition can be applied to both surfaces of the polymer electrolyte film, and thus an electrode catalyst layer free from defects such as delamination and cracks can be formed on both surfaces of the polymer electrolyte film. Therefore, a polymer electrolyte film electrode junction body having excellent quality and high performance can be achieved.

Hereinafter, a specific example will be described further in detail for the method for manufacturing a polymer electrolyte film electrode junction body in this exemplary embodiment. The present invention is not limited to descriptions of specific raw materials that are used in the following example.

### EXAMPLE 3

In Example 3, a polymer electrolyte film electrode junction body was manufactured by applying a catalyst composition to a surface of a polymer electrolyte film, and removing a dispersion medium from the catalyst composition using a heating and drying method in which the dispersion medium was heated and evaporated to be dried.

A first catalyst composition preparing step will be described.

In the first catalyst composition preparing step, catalyst composition a-1 (surface tension at 20°C: 28.2 mN/m) was prepared as a first catalyst composition by a method identical to the method in the catalyst composition preparing step in Example 1.

A first catalyst composition applying step will be described.

In the first catalyst composition applying step, Nafion 112 (manufactured by E. I. du Pont de Nemours and Company, critical surface tension at 20°C: 31.2 mN/m) was provided as a polymer electrolyte film. Catalyst composition a-1 was applied to one surface of Nafion 112 by a screen printing method using a screen printer (manufactured by NEWLONG SEIMITSU KOGYO Co., LTD., product name: DP-320).

First catalyst layer forming step will be described.

In the first catalyst layer forming step, two Nafions 112 coated with catalyst composition a-1 through the first catalyst composition applying step were provided, and left standing in a thermostat (manufactured by YAMATO SCIENTIFIC CO., LTD., model number: DKM 300) at 110°C for 1 hour to remove the dispersion medium from catalyst composition a-1 by heating and drying. Subsequently, Nafions 112 were left standing at room temperature for 2 hours, and an electrode catalyst layer was formed on one surface of each of Nafions 112 (hereinafter, the electrode catalyst layer formed from catalyst composition a-1 by a heating and drying method is referred to as electrode catalyst layer A'-1).

For one of Nafions 112 provided with electrode catalyst layer A'-1 by the above-mentioned method, a critical surface tension of a surface on a side opposite to a surface provided with electrode catalyst layer A'-1 was determined by Zisman plot method.

Specifically, wet index standard solutions having various surface tensions (manufactured by Wako Pure Chemical Industries, Ltd., product name: Wetting Tension Test Mixture) were deposited on a surface of Nafion 112 on a side opposite to the surface provided with electrode catalyst layer A'-1, and a contact angle θ of each of the solutions was measured.

Next, cos θ was plotted in horizontal axis, and the surface tensions of various wet index standard solutions were plotted in vertical axis. A surface tension corresponding to cos θ = 1 was determined. The determined surface tension was defined as a critical surface tension of the surface. As a result, the critical surface tension of the surface of Nafion 112 at 20°C was 29.0 mN/m, and smaller than the critical surface tension of the surface provided with electrode catalyst layer A'-1. For measurement of the contact angle θ, a contact angle meter (manufactured by Kyowa Interface Science Co., LTD., model number: DM-901) was used.

The reason why the critical surface tension of the surface on the side opposite to the surface provided with electrode catalyst layer A'-1 of Nafion 112 decreased may be that in the step of forming electrode catalyst layer A'-1, Nafion 112 was exposed to a high temperature to evaporate moisture from the surface.

A second catalyst composition preparing step will be described.

In the second catalyst composition preparing step, catalyst composition a-2 (surface tension at 20°C: 28.2 mN/m) was prepared as a second catalyst composition by a method identical to the method in the catalyst composition preparing step in Example 1.

A second catalyst composition applying step will be described.

In the second catalyst composition applying step, for other one of two Nafions 112 provided with electrode catalyst layer A'-1 through the first electrode catalyst layer forming step, i.e. Nafion 112 different from Nation 112 of which critical surface tension was measured, a surface on a side opposite to the surface provided with electrode catalyst layer A'-1 was coated with catalyst composition a-2 by a screen printing method using a screen printer (manufactured by NEWLONG SEIMITSU KOGYO Co., LTD., product name: DP-320).

A second electrode catalyst layer forming step will be described.

In the second electrode catalyst layer forming step, Nafion 112 coated with catalyst composition a-2 was left standing in a thermostat (manufactured by YAMATO SCIENTIFIC CO., LTD., model number: DKM 300) at 110°C for 1 hour. Accordingly, the dispersion medium was removed from catalyst composition a-2 by heating and drying. Subsequently, Nations 112 were left standing at room temperature for 2 hours, and an electrode catalyst layer was formed on the other surface of each of Nafions 112 (hereinafter, the electrode catalyst layer formed from catalyst composition a-2 by a heating and drying method is referred to as electrode catalyst layer A'-2). In this way, a polymer electrolyte film electrode junction body (hereinafter, referred to as polymer electrolyte film electrode junction body D) was manufactured.

A surface of manufactured polymer electrolyte film electrode junction body D was visually observed. Electrode catalyst layer A'-1 and electrode catalyst layer A'-2 were not delaminated nor cracked.

### EXAMPLE 4

In Example 4, catalyst composition a-1 (surface tension at 20°C: 28 mN/m) prepared by a method identical to the method in the catalyst composition preparing step in Example 1 was provided as a first catalyst composition. Electrode catalyst layer A'-1 was formed on one surface of Nafion 112 by methods identical to the methods in the first catalyst composition applying step and the first electrode catalyst forming step in Example 3.

Next, 15 parts by weight of a carbon powder carrying platinum and ruthenium (manufactured by Tanaka Kikinzoku Kogyo K.K., product number: TEC66E50) as a catalyst powder for a second catalyst composition, 50 parts by weight of a 10% Nafion dispersion solution (manufactured by Sigma-Aldrich Co. LLC., product number: 527114) as a polymer electrolyte, and 35 parts by weight of pure water and 30 parts by weight of ethanol as a dispersion medium for the second catalyst composition were taken in a container. These materials were mixed and kneaded at room temperature for 2 hours by a disperser (manufactured by Seiwa Giken, product name: RS-05W) and an ultrasonic homogenizer (manufactured by NIHONSEIKI KAISHA LTD., product name: US-150E) to prepare a catalyst composition (hereinafter, referred to as catalyst composition d-2).

A surface tension of prepared catalyst composition d-2 was measured using a surface tensiometer (manufactured by Kyowa Interface Science Co., LTD., model number: DY-300), and the result showed that the surface tension of catalyst composition d-2 at 20°C was 32.8 mN/m.

Subsequently, on a surface of Nafion 112 on a side opposite to the surface provided with electrode catalyst layer A'-1, a second electrode catalyst layer was formed from catalyst composition d-2 by methods identical to the methods in the second catalyst composition applying step and the second electrode catalyst forming step in Example 3 (hereinafter, the electrode catalyst layer formed from catalyst composition d-1 by a heating and drying method is referred to as electrode catalyst layer D'-2). In this way, a polymer electrolyte film electrode junction body (hereinafter, referred to as polymer electrolyte film electrode junction body E) was manufactured.

A surface of manufactured electrolyte film electrode junction body E was visually observed. Electrode catalyst layer A'-1 and electrode catalyst layer D'-2 were not delaminated nor cracked.

### COMPARATIVE EXAMPLE 2

In Comparative Example 2, catalyst composition c-1 (surface tension at 20°C: 32.8 mN/m) prepared by a method identical to the method in Comparative Example 1 was provided as a first catalyst composition, and catalyst composition c-2 (surface tension at 20°C: 32.8 mN/m) prepared by a method identical to the method in Comparative Example 1 was provided as a second catalyst composition. An electrode catalyst layer was formed on both surfaces of a polymer electrolyte film by a method identical to the method in Example 3 (hereinafter, the electrode catalyst layer formed from catalyst composition c-1 by a heating and drying method is referred to as electrode catalyst layer C'-1, and the electrode catalyst layer formed from catalyst composition c-2 by a heating and drying method is referred to as electrode catalyst layer C'-2). In this way, a polymer electrolyte film electrode junction body (hereinafter, referred to as polymer electrolyte film electrode junction body F) was manufactured.

A surface of manufactured polymer electrolyte film electrode junction body F was visually observed. Electrode catalyst layer C'-1 and electrode catalyst layer C'-2 were partially delaminated. There were a large number of cracks even in portions where the electrode catalyst layer existed.

### COMPARATIVE EXAMPLE 3

In Comparative Example 3, catalyst composition b-1 (surface tension at 20°C: 30.2 mN/m) prepared by a method identical to the method in Example 2 was provided as a first catalyst composition. Catalyst composition b-2 (surface tension at 20°C: 30.2 mN/m) prepared by a method identical to the method in Example 2 was provided as a second catalyst composition. An electrode catalyst layer was formed on both surfaces of a polymer electrolyte film by a method identical to the method in Example 3. Hereinafter, the electrode catalyst layer formed from catalyst composition b-1 by a heating and drying method is referred to as electrode catalyst layer B'-1, and the electrode catalyst layer formed from catalyst composition b-2 by a heating and drying method is referred to as electrode catalyst layer B'-2. In this way, a polymer electrolyte film electrode junction body (hereinafter, referred to as polymer electrolyte film electrode junction body G) was manufactured.

A surface of manufactured polymer electrolyte film electrode junction body G was visually observed. Electrode catalyst layer B'-1 was not delaminated nor cracked. Electrode catalyst layer B'-2 was partially delaminated. There were a large number of cracks even in portions where the electrode catalyst layer existed.

### COMPARATIVE EXAMPLE 4

In Comparative Example 4, catalyst composition b-1 (surface tension at 20°C: 30.2 mN/m) prepared by a method identical to the method in Example 2 was provided as a first catalyst composition. Catalyst composition c-2 (surface tension at 20°C: 32.8 mN/m) prepared by a method identical to the method in Comparative Example 1 was provided as a second catalyst composition. Electrode catalyst layer B'-1 and electrode catalyst layer C'-2 were formed on both surfaces of a polymer electrolyte film by a method identical to the method in Example 3. In this way, a polymer electrolyte film electrode junction body (hereinafter, referred to as polymer electrolyte film electrode junction body H) was manufactured.

A surface of manufactured polymer electrolyte film electrode junction body H was visually observed. Electrode catalyst layer B'-1 was not delaminated nor cracked. Electrode catalyst layer C'-2 was partially delaminated. There were a large number of cracks even in portions where the electrode catalyst layer existed.

The above results are collectively shown in Table 3.

**[Table 3]**

| | Polymer electrolyte film electrode junction body | Polymer electrolyte film | | Catalyst composition | | | | Electrode catalyst layer | | | |
|---|---|---|---|---|---|---|---|---|---|---|---|
| | Constituent material | Constituent material | Critical surface tension (mN/m@20°C) First catalyst composition-applied surface/second catalyst composition-app lied surface | Constituent material | Surface tension (mN/m@20°C) | Constituent material | Surface tension (mN/m@20°C) | Constituent material | Whether or not delaminated or cracked | Constituent material | Whether or not delaminated or cracked |
| Example 3 | D | Nafion 112 | 31.2/29.0 | a-1 | 28.2 | a-2 | 28.2 | A'-1 | Not delaminated Not cracked | A'-2 | Not delaminated Not cracked |
| Example 4 | E | Nafion 112 | 31.2/29.0 | a-1 | 28.2 | d-2 | 26.2 | A'-1 | Not delaminated Not cracked | D'-2 | Not delaminated Not cracked |
| Comparative Example 2 | F | Nafion 112 | 31.2/29.0 | c-1 | 32.8 | c-2 | 32.8 | C'-1 | Delaminated Cracked | C'-2 | Delaminated Cracked |
| Comparative Example 3 | G | Nafion 112 | 31.2/29.0 | b-1 | 30.2 | b-2 | 30.2 | B'-1 | Not delaminated Not cracked | B'-2 | Delaminated Cracked |
| Comparative Example 4 | H | Nafion 112 | 31.2/29.0 | b-1 | 30.2 | c-2 | 32.8 | B'-1 | Not delaminated Not cracked | C'-2 | Delaminated Cracked |

The polymer electrolyte film electrode junction bodies (polymer electrolyte film electrode junction bodies D, E) in examples were not delaminated nor cracked in the electrode catalyst layer, and had excellent quality. This may be because the catalyst composition had a surface tension smaller than a critical surface tension of the polymer electrolyte film, and therefore the catalyst composition was wetted with the polymer electrolyte film, so that it was able to form a uniform electrode catalyst layer.

The polymer electrolyte film electrode junction bodies (polymer electrolyte film electrode junction bodies G, H) in Comparative Examples 3 and 4 were not delaminated nor cracked in one electrode catalyst layer. Polymer electrolyte film electrode junction bodies G, H were delaminated and cracked in the other electrode catalyst layer. Polymer electrolyte film electrode junction bodies G, H were inferior in quality to polymer electrolyte film electrode junction bodies D, E.

This may be because in the electrode catalyst layer which was not delaminated nor cracked, the catalyst composition had a surface tension smaller than a critical surface tension of the polymer electrolyte film, and therefore the catalyst composition was wetted with the polymer electrolyte film, so that it was able to form a uniform electrode catalyst layer. In the electrode catalyst layer which was delaminated or cracked, the catalyst composition had a surface tension larger than a critical surface tension of the polymer electrolyte film, and therefore the catalyst composition was not wetted with the polymer electrolyte film, so that it was not able to form a uniform electrode catalyst layer.

Polymer electrolyte film electrode junction body F in the Comparative Example 2 was delaminated or cracked in both electrode catalyst layers. Polymer electrolyte film electrode junction body F was inferior in quality to polymer electrolyte film electrode junction bodies D, E.

This may be because the catalyst composition had a surface tension larger than a critical surface tension of the polymer electrolyte film. Therefore, the catalyst composition was not wetted with the polymer electrolyte film, and thus it was not able to form a uniform electrode catalyst layer.

Subsequently, performance of each of the polymer electrolyte film electrode junction bodies described above was examined, and influences of the performance of the polymer electrolyte film electrode junction body on power generation performance of a fuel cell was examined. For this purpose, single cells (4) to (8) were prepared using polymer electrolyte film electrode junction bodies D to H, and a power generation test was conducted.

Here, single cells (4) to (8) were prepared in the following manner. A gas diffusion layer was disposed on both surfaces of each of polymer electrolyte film electrode junction bodies D to H. Subsequently, a gasket composed of a silicone resin (manufactured by KUREHA ELASTOMER Co., Ltd., product number: SB50NJP) was bonded to each of polymer electrolyte film electrode junction bodies D to H and an outer periphery of the gas diffusion layer. Further, a separator formed from a resin-impregnated graphite plate with a gas channel formed on a surface was disposed on both surfaces of the polymer electrolyte film electrode junction body.

The gas diffusion layer was prepared in the following manner: a mixture of a dispersion of acetylene black and polytetrafluoroethylene (manufactured by DAIKIN INDUSTRIES, Ltd., product name: D-1) and pure water was applied to a carbon paper (manufactured by Toray Industries, Inc., product name: TGP-H-120), and heated at 350°C for 2 hours.

Power generation performance of single cells (4) to (8) was measured in the following manner. Air was fed through an air electrode, a hydrogen gas containing 25% of carbon dioxide and 50 ppm of carbon monoxide was fed through a fuel electrode, a cell temperature was set to 80°C, an air utilization rate was set to 40%, a fuel utilization rate was set to 80%, a dew point of air was set to 60°C, a dew point of the hydrogen gas was set to 75°C, and a cell voltage in generation of power at a current density of 0.2 A/cm² was measured. Cell voltages of single cells (4) to (8) are shown in Table 4.

**[Table 4]**

| Single cell | Polymer electrolyte film electrode junction body | Air electrode Fuel electrode | | | | Cell voltage @0.2A/cm² |
|---|---|---|---|---|---|---|
| | | Electrode catalyst layer | Whether or not delaminated or cracked | Electrode catalyst layer | Whether or not delaminated or cracked | |
| (4) | D | A'-1 | Not delaminated Not cracked | A'-2 | Not delaminated Not cracked | 730 mV |
| (5) | E | A'-1 | Not delaminated Not cracked | D'-2 | Not delaminated Not cracked | 730 mV |
| (6) | F | C'-1 | Delaminated Cracked | C'-2 | Delaminated Cracked | 630 mV |
| (7) | G | B'-1 | Not delaminated Not cracked | B'-2 | Delaminated Cracked | 650 mV |
| (8) | H | B'-1 | Not delaminated Not cracked | C'-2 | Delaminated Cracked | 650 mV |

Single cells (single cells (4), (5)) obtained using polymer electrolyte film electrode junction bodies D, E in the example, which were not cracked nor delaminated in the electrode catalyst layer, had a higher cell voltage as compared to single cells (single cells (6) to (8)) obtained using the polymer electrolyte film electrode junction bodies (polymer electrolyte film electrode junction bodies F to H) in the comparative example, which were cracked and delaminated in the electrode catalyst layer.

This may be because the catalyst composition was wetted with the polymer electrolyte film, resulting in formation of a uniform electrode catalyst layer which was not delaminated nor cracked. Thus, in single cells (4), (5), the polymer electrolyte film electrode junction body had improved performance. Therefore, in single cells (4), (5), the fuel cell had improved power generation performance as compared to single cells (6) to (8).

From the above power generation test, it has been confirmed that polymer electrolyte film electrode junction bodies D, E prepared in the exemplary embodiment have improved performance, so that power generation performance of the fuel cell is improved.

### MODIFICATIONS

Exemplary embodiments of the present invention have been described above, but the present invention is not limited to these exemplary embodiments. Various configurations as described below can be employed without departing from a spirit of the present invention.

### MODIFICATION 1

In the exemplary embodiments described above, Nafion 112 is used as a polymer electrolyte film. However, a resin having hydrogen ion conductivity and containing a group such as a sulfonic acid group, a carboxyl group or a phosphoric acid group with a fluorine-containing polymer as a skeleton can be used as the polymer electrolyte film. As the polymer electrolyte film, other polymer electrolyte film such as, for example, Aciplex (registered trademark) or Flemion (registered trademark) can be used.

### MODIFICATION 2

In the exemplary embodiments described above, platinum or ruthenium is used as a catalyst. However, for example, a noble metal such as gold, silver, rhodium, palladium, osmium or iridium, a base metal such as iron, nickel, manganese, cobalt, chromium, copper, zinc, molybdenum, tungsten, germanium or tin, an alloy of the noble metal and the base metal, or a compound such as a metal oxide or a metal complex can be used as the catalyst.

### MODIFICATION 3

In the exemplary embodiments described above, acetylene black, vulcan, ketjen black or the like can be used as a carbon powder carrying platinum as a catalyst. In place of the carbon powder, for example, carbon materials such as carbon nanotubes and carbon nanofibers, and also carbon compounds, typically silicon carbide etc. can be used.

### MODIFICATION 4

In the exemplary embodiments described above, a 10% Nafion dispersion solution is used as a polymer electrolyte. A polymer having excellent heat resistance and chemical resistance and containing an acidic functional group can be used as the polymer electrolyte. As the polymer electrolyte, for example, a polymer electrolyte obtained by dispersing a perfluorosulfonic acid ionomer such as Nafion (registered trademark) or Flemion (registered trademark) in an organic solvent such as ethanol or water can be used.

In the exemplary embodiments described above, as components of a catalyst composition, a catalyst powder, a polymer electrolyte and a dispersion medium are used. However, the catalyst composition can be formed from a catalyst powder and a dispersion medium without using a polymer electrolyte.

### MODIFICATION 5

In the exemplary embodiments described above, a mixed solvent of pure water and ethanol is used as a dispersion medium. However, other than pure water or ethanol, an alcohol such as methanol or isopropanol, a glycol such as ethylene glycol, or a mixed solvent containing at least two of the alcohols and glycols can be used as the dispersion medium.

### MODIFICATION 6

In the catalyst composition applying step (step S12, step S22) in the exemplary embodiments described above, a catalyst composition is applied to a polymer electrolyte film by a screen printing method. The catalyst composition may be applied to the polymer electrolyte film by a doctor blade method, a spraying method, a bar coating method or a die coating method in place of a screen printing method.

### MODIFICATION 7

In the electrode catalyst layer forming step (step S13, step S23, step S26) in the exemplary embodiments described above, a dispersion medium is removed from a catalyst composition by a natural drying method or a heating and drying method. As a method for removing a dispersion medium from a catalyst composition, the dispersion medium may be removed by a supercritical drying method or a freeze drying method in place of a natural drying method or a heating and drying method.

### INDUSTRIAL APPLICABILITY

As described above, with a method for manufacturing a polymer electrolyte film electrode junction body according to the present invention, a polymer electrolyte film electrode junction body which is free from defects such as delamination and cracks in an electrode catalyst layer, and has excellent quality and high performance is obtained. When the polymer electrolyte film electrode junction body is incorporated in a fuel cell, a high cell voltage can be exhibited. Therefore, the polymer electrolyte film electrode junction body can be applied in fuel cells for use in household cogeneration systems, power sources for electric cars, and portable power sources.

### REFERENCE MARKS IN THE DRAWINGS

10, 50: catalyst composition
11, 51: catalyst particle
12, 52: carbon powder
13, 53: catalyst powder
14, 54: polymer electrolyte
15, 55: dispersion medium
20, 40, 60, 80: polymer electrolyte film electrode junction body
21, 42, 61, 82: polymer electrolyte film
22, 43: electrode catalyst layer
41: catalyst composition
62, 83: first electrode catalyst layer
63, 85: second electrode catalyst layer
81: first catalyst composition
84: second catalyst composition

## Claims

1. A method for manufacturing a polymer electrolyte film electrode junction body,
the method comprising:
a catalyst composition applying step of applying a catalyst composition to both surfaces of a polymer electrolyte film, the catalyst composition containing a catalyst powder and a dispersion medium; and
an electrode catalyst layer forming step of forming an electrode catalyst layer on both surfaces of the polymer electrolyte film by removing the dispersion medium from the catalyst composition applied to the polymer electrolyte film,
wherein the catalyst composition has a surface tension smaller than a critical surface tension of the polymer electrolyte film.

2. A method for manufacturing a polymer electrolyte film electrode junction body,
the method comprising:
a first catalyst composition applying step of applying a first catalyst composition to one surface of a polymer electrolyte film, the first catalyst composition containing a catalyst powder and a dispersion medium;
a first electrode catalyst layer forming step of forming a first electrode catalyst layer on the one surface of the polymer electrolyte film by removing the dispersion medium from the first catalyst composition applied to the polymer electrolyte film;
a second catalyst composition applying step of applying a second catalyst composition to another surface of the polymer electrolyte film, the second catalyst composition containing a catalyst powder and a dispersion medium; and
a second electrode catalyst layer forming step of forming a second electrode catalyst layer on the other surface of the polymer electrolyte film by removing the dispersion medium from the second catalyst composition applied to the polymer electrolyte film,
wherein the first catalyst composition and the second catalyst composition each have a surface tension smaller than a critical surface tension of the polymer electrolyte film.

3. The method for manufacturing a polymer electrolyte film electrode junction body according to claim 2, wherein
the second catalyst composition applying step is carried out after the first electrode catalyst layer forming step, and
the surface tension of the second catalyst composition is smaller than a critical surface tension of a surface of the polymer electrolyte film on a side opposite to the surface provided with the first electrode catalyst layer formed through the first electrode catalyst layer forming step.

4. The method for manufacturing a polymer electrolyte film electrode junction body according to any one of claims 1 to 3, wherein
the dispersion medium is evaporated to be removed from the catalyst composition by heating.

5. A catalyst composition for forming an electrode catalyst layer on a polymer electrolyte film by applying the catalyst composition to the polymer electrolyte film, and removing a dispersion medium,
the catalyst composition containing a catalyst powder and the dispersion medium,
the catalyst composition having a surface tension smaller than a critical surface tension of the polymer electrolyte film.

6. A catalyst composition for forming an electrode catalyst layer on a surface of a polymer electrolyte film by applying the catalyst composition to the surface, and removing a dispersion medium, the polymer electrolyte film having an electrode catalyst layer formed on a surface opposite to the surface coated with the catalyst composition,
the catalyst composition containing a catalyst powder and the dispersion medium,
the catalyst composition having a surface tension smaller than a critical surface tension of the surface of the polymer electrolyte film on a side opposite to the surface provided with the electrode catalyst layer.

7. A polymer electrolyte film electrode junction body manufactured by the method according to any one of claims 1 to 4.

8. A polymer electrolyte film electrode junction body manufactured using the catalyst composition according to claim 5 or 6.
